# EUROPÄISCHE PATENTANMELDUNG

(11) **EP 2 071 197 A1**
(43) Veröffentlichungstag der Anmeldung: **17.06.2009**
(21) Anmeldenummer: 07024148.4
(22) Anmeldetag: 12.12.2007
(51) Int. Cl.: F16B 13/14

(54) **Längeneinstellbarer Dübel**

(71) Anmelder: HTP Motion GmbH, 86842 Türkheim (DE)
(72) Erfinder: Fendt, Reinhardt, 86830 Schwabmünchen (DE); Mössnang, Christian, 87757 Kirchheim/Schwaben (DE)
(74) Vertreter: Köster, Hajo

(57) **Zusammenfassung**

Die Erfindung betrifft längeneinstellbaren Dübel (1), insbesondere zur Befestigung einer Stange oder Gewindestange an Hohl- und Vollbaustoffen, mit einem ersten hülsenartigen, in seiner Wand mehrere durchgehende Öffnungen (10) aufweisender Dübelteil (2) und einem zweiten hülsenartigen, in seiner Wand mehrere durchgehende Öffnungen (15) aufweisender Dübelteil (3), der auf den ersten hülsenartigen Dübelteil (1) aufschiebbar ist. Dieser Dübel (1) ist **dadurch gekennzeichnet, dass** der erste Dübelteil (2) mit dem zweiten Dübelteil (3) verrastbar ist. Dadurch kann die gewünschte bzw. erforderliche Länge des Dübels (1) eingestellt werden.

## Beschreibung

Die Erfindung betrifft einen längeneinstellbaren Dübel, insbesondere zur Befestigung einer Stange oder Gewindestange an Hohl- und Vollbaustoffen, mit einem ersten hülsenartigen, in seiner Wand mehrere durchgehende Öffnungen aufweisender Dübelteil und einem zweiten hülsenartigen, in seiner Wand mehrere durchgehende Öffnungen aufweisender Dübelteil, der auf den ersten hülsenartigen Dübelteil aufschiebbar ist.

Mit Hohlbaustoffen sind beispielsweise Hohlblockziegel oder Platten gemeint, mit Vollbaustoffen werden beispielsweise Beton oder dergleichen bezeichnet.

Dübel der hier in Rede stehenden Art sind bereits bekannt. So existieren beispielsweise bereits Dübel, die in einer Art Steckverfahren verlängert werden. Reicht beispielsweise die Länge eines einzelnen Dübels nicht aus, dann wird auf den ersten Dübel ein zweiter Dübel aufgesteckt. Die Länge der beiden Dübel können gleich oder verschieden sein.

Aufgabe der vorliegenden Erfindung ist es, einen gattungsgemäßen Dübel bereit zu stellen, dessen Länge individuell einstellbar ist.

Gelöst wird diese Aufgabe durch die Lehre der Ansprüche.

Der erfindungsgemäße Dübel besteht aus zwei in etwa hülsenartigen Dübelteilen, wobei der zweite hülsenartige Dübelteil auf den ersten hülsenartigen Dübelteil aufschiebbar ist. Die beiden Dübelteile sind mit anderen Worten teleskopartige zueinander verschiebbar.

Im Rahmen der vorliegenden Unterlagen wird ein Dübel beschrieben, bei dem der zweite hülsenartige Dübelteil auf den ersten hülsenartige Dübelteil aufschiebbar ist. Erfindungsgemäß umfasst ist auch die kinematische Umkehr, wonach der zweite hülsenartige Dübelteil in den ersten hülsenartigen Dübelteil einschiebbar ist. Zum besseren Verständnis und aus Zwecken der klareren Darstellbarkeit wird nachstehend nur die erste Ausführung beschrieben.

Der erfindungsgemäße Dübel zeichnet sich dadurch aus, dass der erste Dübelteil mit dem zweiten Dübelteil verrastbar ist. Auf diese Weise kann der aus diesen beiden Teilen aufgebaute Dübel in seiner Länge individuell eingestellt werden. Dabei wird axiale die Position des ersten Dübelteils bezüglich der axialen Position des zweiten Dübelteils fixiert. Die Verrastung kann dabei jedoch derart sein, dass sie auch wieder lösbar ist, beispielsweise bei Anwendung einer Kraft, die einen bestimmten Mindestwert überschreitet. Zweckmäßigerweise ist eine derartige Verrastung an mehreren axial beabstandeten Positionen des ersten Dübelteils bezüglich des zweiten Dübelteils möglich, wobei der Abstand dieser Positionen vorzugsweise der gleiche ist.

Nach einer bevorzugten Ausführungsform ist der erste Dübelteil länger als der zweite Dübelteil. Der zweite Dübelteil ist dabei insbesondere derart ausgestaltet, dass er vollständig auf den ersten Dübelteil aufschiebbar ist, so dass dasjenige Ende des ersten Dübelteils, auf welches der zweite Dübelteil aufgeschoben wurde, aus diesem zweiten Dübelteil herausragt und abgelängt werden kann, so dass die Länge des ersten Dübelteils reduziert wird. Vorzugsweise weist der erste Dübelteil dazu mindestens eine Sollbruchstelle auf, so dass diese Ablängung durch "Abbrechen" erreicht werden kann.

Beide Dübelteile besitzen in ihrer Wand bzw. Wandung mehrere durchgehende Öffnungen und sind insbesondere siebhülsenartig ausgestaltet. Wird in das Innere eines derartigen Dübels eine Masse eingebracht, beispielsweise ein 2-Komponenten-Injektionsmörtel, dann kann diese Masse durch die Öffnungen vom Inneren des Dübels nach außen gelangen und beispielsweise an der Wandung einer Bohrung, an welcher der Dübel eingesetzt ist, anhaften oder auch Hohlräume zumindest teilweise ausfüllen und so eine Verankerung sicher stellen. Die eine Komponente eines derartigen Injektionsmörtels kann beispielsweise ein Reaktionsharztyp sein, während die andere Komponente den erforderlichen Härter darstellt. Die Öffnungen in den beiden Dübelteilen sollten derart angeordnet und/oder dimensioniert sein und die Verrastung sollte derart erfolgen, dass die Öffnungen der beiden Dübelteile möglichst optimal im verrasteten Zustand fluchten bzw. übereinander liegen, so dass eine eingefüllte Masse ungehindert von innen nach außen gelangen kann.

Handelt es sich bei den Dübelteilen um siebhülsenartig ausgebildete Elemente, dann wird eine besonders gute Verankerung des Dübels erreicht.

Um die beiden Dübelteile in mehreren in Axialrichtung festgelegten Positionen miteinander bzw. aneinander zu fixieren, weist der zweite Dübelteil vorzugsweise mehrere in Axialrichtung angeordnete und voneinander beabstandete Ausnehmungen auf, in die ein nach außen zeigender Vorsprung des ersten Dübelteils zur Herstellung der Verrastung eingreift bzw. eingreifen kann. Auch in diesem Fall sei noch einmal daran erinnert, dass auch die kinematische Umkehr denkbar ist, wonach der erste Dübelteil mehrere derartige Ausnehmungen besitzt, während der zweite Dübelteil einen nach innen zeigenden Vorsprung besitzt.

Nach einer weiteren bevorzugten Ausführungsform besitzt der erste Dübelteil mindestens eine sich axial erstreckende Reihe von nach außen zeigenden, in Axialrichtung gleichmäßig beabstandeten und in etwa gleich ausgestalteten Vorsprüngen, während der zweite Dübelteil mindestens eine sich axial erstreckende Reihe von in Axialrichtung gleichmäßig voneinander beabstandeten und in etwa gleich ausgestalteten Ausnehmungen besitzt und der Abstand der Vorsprünge dem Abstand der Ausnehmungen entspricht. Auf diese Weise können die beiden Dübelteile in mehreren Positionen zueinander fixiert werden und die Länge optimal eingestellt werden.

Die Anzahl der Reihen der Vorsprünge des ersten Dübelteils entspricht vorzugsweise der Anzahl der Reihen der Ausnehmungen des zweiten Dübelteils. Die Reihen des ersten Dübelteils sind dabei unter den gleichen Winkel, bezogen auf den Querschnitt, wie die Reihen des zweiten Dübelteils, ebenfalls bezogen auf den Querschnitt, angeordnet.

Der erste Dübelteil ist vorzugsweise an einem Ende durch eine Kappe verschlossen, die eine darin eingeführte Stange axial zentrieren kann. Der zweite Dübelteil weist an seinem von der Kappe weg zeigenden Ende einen gelenkig damit verbundenen Deckel auf, der auf den zweiten Dübelteil aufgesetzt werden kann, diesen quasi verschließt und eine zentrische Durchgangsbohrung zur Führung der Stange aufweist. Auf diese Weise ist es möglich eine Stange und insbesondere eine Gewindestange zentrisch im Dübelinnenraum zu haltern, bevor die oder vorzugsweise nachdem die oben beschriebene Masse, beispielsweise ein Mörtel, in das Dübelinnere eingeführt wird und dann nicht nur die Verankerung des Dübels sondern auch die Halterung der Stange sicher stellt.

Die Querschnittsform der beiden Dübelteile kann im übrigen beliebiger Art sein. Es muss lediglich gefordert werden, dass die Dübelteile aufeinander aufschiebbar bzw. zueinander verschiebbar ausgestaltet sind. Daher sind die Querschnittsformen der beiden Dübelteile zweckmäßigerweise formkongruent. So kann die Querschnittsform dieser beiden Dübelteile beispielsweise quadratisch sein. Vorzugsweise ist die Querschnittsform jedoch kreisscheibenförmig, so dass die beiden Dübelteile eine zylindrische Hülsenform besitzen.

Sowohl der erste Dübelteil als auch der zweite Dübelteil sind vorzugsweise aus einem Kunststoff einstückig spritzgeformt. Derartige Kunststoffmaterialien sind dem Fachmann bekannt, so dass sich weitere Erörterungen erübrigen.

Die Erfindung wird im folgenden anhand der beiliegenden Zeichnungen näher erläutert, welche eine bevorzugte Ausführungsform skizzenartig und in nicht maßstabsgetreuer Weise wiedergeben. In den Zeichnungen zeigen:
- Fig. 1: eine perspektivische Ansicht eines erfindungsgemäßen Dübels, bei dem der zweite Dübelteil vollständig auf den ersten Dübelteil aufgeschoben ist,
- Fig. 2: eine Seitenansicht des erfindungsgemäßen Dübels, bei dem der zweite Dübelteil nur teilweise auf den ersten Dübelteil aufgeschoben ist,
- Fig. 3: eine der Figur 2 analoge Ansicht, wobei jedoch der zweite Dübelteil bis zu einer den ersten Dübelteil verschließenden Kappe aufgeschoben ist,
- Fig. 4: eine Schnittansicht, bei dem der zweite Dübelteil nur teilweise wie bei der in der Fig. 2 gezeigten Ansicht auf den ersten Dübelteil aufgeschoben ist und ein Deckel auf den zweiten Dübelteil aufgesetzt ist,
- Fig. 5: eine vergrößerte Ansicht des Details X gemäß der Figur 4,
- Fig. 6: eine vergrößerte Ansicht des Details Y der Figur 4 und
- Fig. 7: eine Schnittansicht gemäß A-A in Axialrichtung betrachtet, wobei der Deckel jedoch geöffnet ist.

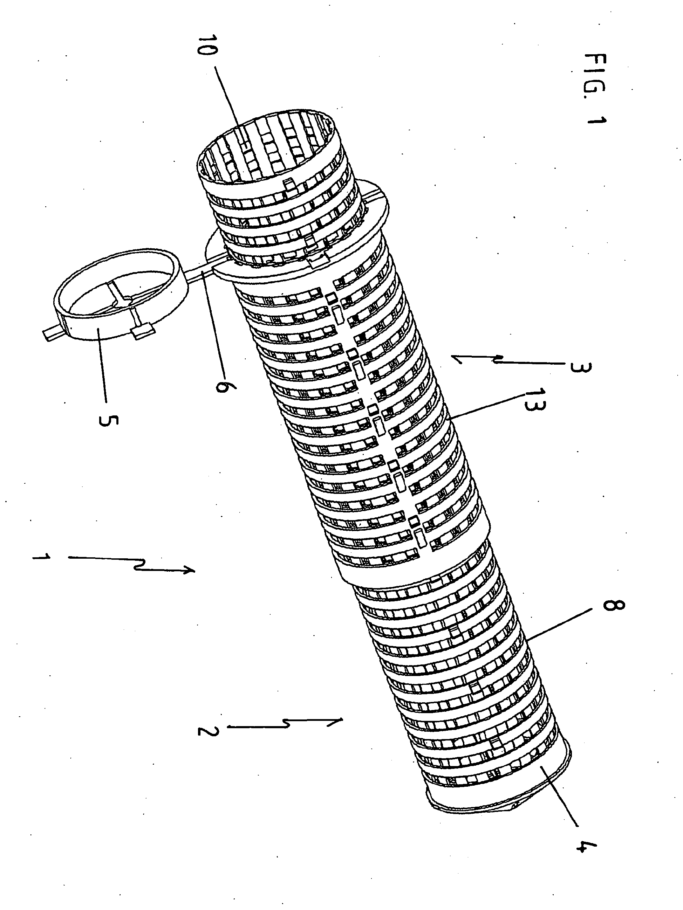

Der in der Fig. 1 gezeigte Dübel 1 besitzt einen ersten Dübelteil 2 und einen zweiten Dübelteil 3, der auf den ersten Dübelteil 2 vollständig aufgeschoben ist. Beide Dübelteile 2 und 3 sind siebhülsenartig ausgestaltet bzw. stellen eine Art zylindrische Siebhülse dar. Ein Ende des ersten Dübelteils 2 ist durch eine in Richtung nach axial außen trichterförmig ausgestaltete Kappe 4 verschlossen, während auf das andere Ende des ersten Dübelteils 2 der zweite Dübelteil 3 aufgeschoben wurde, und zwar so weit, dass dieses der Kappe 4 gegenüberliegende Ende des ersten Dübelteils 2 aus dem zweiten Dübelteil 3 herausragt. Der zweite Dübelteil 3 besitzt an seinem von der Kappe 4 weg zeigenden Ende einen Deckel 5, die über ein Filmscharnier 6 an dem zweiten Dübelteil 3 angelenkt ist.

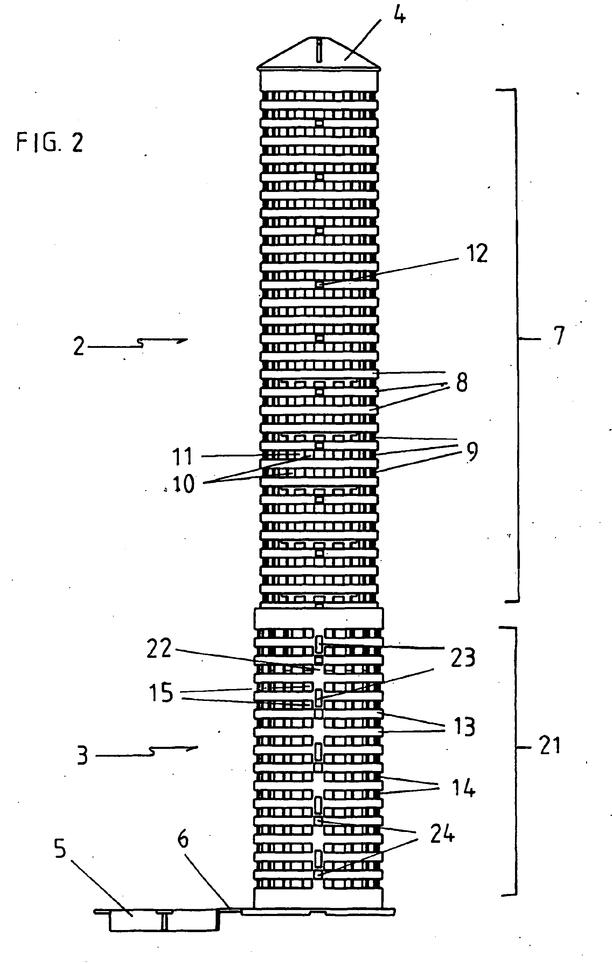

Wie man insbesondere aus der Seitenansicht der Fig. 2 ersieht, besitzt der ersten Dübelteil 2 eine zylindrische Wand 7, die, in Axialrichtung betrachtet, alternierend dünne und dicke Abschnitte besitzt, so dass sich dicke Ringe 8 und dünne Ringe 9 ergeben. Die Ausdrücke "dick" und "dünn" beziehen sich dabei auf die radiale Ausdehnung der Materialstärke der Ringe 8 bzw. 9. Der Innendurchmesser der Ringe 8 und 9 ist der gleiche, während der Außendurchmesser für den dickeren Ring 8 größer und für den dünneren Ring 9 kleiner ist.

Im Bereich der dünnen Ringe 9 sind zahlreiche durchgehende Öffnungen 10 vorgesehen. Diese Öffnungen 10 sind für jeden Ring, in Umlaufrichtung betrachtet, gleichmäßig verteilt angeordnet. Für jeden einzelnen dünnen Ring 9 bedeutet dies, dass, ebenfalls in Umlaufrichtung betrachtet, auf eine Öffnung 10 ein Steg 11 und dann wieder eine Öffnung 10 usw. folgt. Die Öffnungen 10 und Stege 11 der Ringe 9 sind dabei in Axialrichtung ausgerichtet, so dass die Stege 11 einen "durchgehenden", sich in Axialrichtung erstreckenden Gesamtsteg und die Öffnungen 10 eine Reihe von Öffnungen 10 ergeben. Die dicken Ringe 8 laufen vollständig peripher um und besitzen keine Öffnungen.

Der zweite Dübelteil ist in etwa analog aufgebaut und besitzt somit dicke Abschnitte/Ringe 13 und dünne Abschnitte/Ringe 14, wobei die dünnen Ringe 14 durchgehende Öffnungen 15 besitzen, welche den Öffnungen 10 des ersten Dübelteils 2 entsprechen. Auf diese Weise ergibt sich eine ähnliche Ring- und Siebstruktur wie beim ersten Dübelteil 2.

Der Innendurchmesser der dicken und dünnen Ringe 13 und 14 ist der gleiche, wobei dieser Innendurchmesser jedoch dem Außendurchmesser der dicken Ringe 8 des ersten Dübelteils 2 in etwa entspricht oder geringfügig größer ist, so dass der zweite Dübelteil 3 teleskopartig auf den ersten Dübelteil 2 aufgeschoben werden kann.

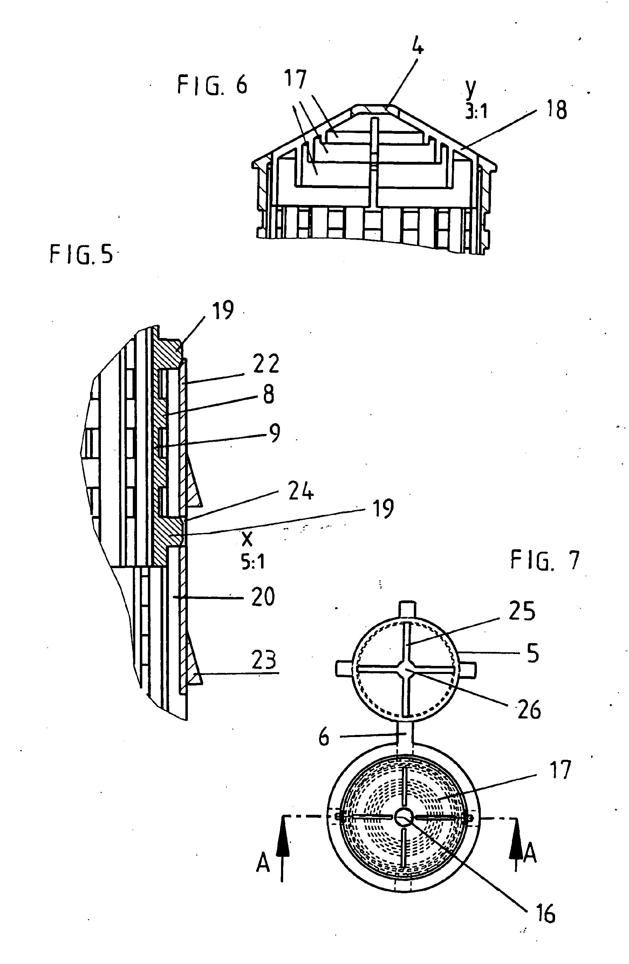

Der erste Dübelteil 2 wird an einem Ende (in den Figuren 2 bis 4 oben) durch eine trichterförmige Kappe 5 abgeschlossen, man vergleiche Fig. 6. Diese Kappe 5 weist innen mehrere Zylinderhülsenabschnitte 17 auf, die einen unterschiedlichen Durchmesser besitzen. Diese Zylinderabschnitte 17 sind koaxial zum ersten Dübelteil 2 angeordnet. Zudem erstrecken sich diese Zylinderabschnitte 17 umso mehr in Axialrichtung und somit um so weiter in den Innenraum des ersten Dübelteils 2 hinein, desto größer ihr Durchmesser ist. Diese Zylinderhülsenabschnitte 17 dienen zum Aufnehmen eines Endes einer in den Dübel eingesetzten Stange (nicht gezeigt). Je kleiner der Durchmesser dieser Stange ist, desto weiter kann diese Stange in den Dübel hineingeschoben werden. Die Zentrierung erfolgt dabei durch die unterschiedlichen Durchmesser der Zylinderhülsenabschnitte 17. Zudem weist diese Kappe 4 mehrere Schlitze 18 auf, die kreuzförmig angeordnet sind.

Der erste Dübelteil 2 besitzt mehrere radial nach außen ragende Vorsprünge 19, 19', die in Axialrichtung gleichmäßig voneinander beabstandet sind und bei der in den Figuren gezeigten Ausführungsform außen an jedem vierten dicken Ring 8 vorhanden sind. Die Vorsprünge 19, 19' bilden zwei axial ausgerichtete Reihen. Die Reihe mit den Vorsprüngen 19 liegt dabei der Reihe mit den Vorsprüngen 19' diametral gegenüber. Mit anderen Worten, diese beiden Reihen von Vorsprüngen 19 bzw. 19' bilden einen Winkel von 180°. Die dicken Ringe 8 weisen dabei entweder keine derartigen Vorsprünge oder zwei Vorsprünge 19, 19' auf. Die Vorsprünge 19, 19' befinden sich somit immer auf der gleichen axialen Höhe.

Der zweite Dübelteil 3 wird auf den ersten Dübelteil 2 derartig aufgeschoben, dass die Vorsprünge 19, 19' in einer Nut 20 zu liegen kommen, die sich in der zylindrischen Wand 21 des zweiten Dübelteils 3 in Axialrichtung erstreckt. Diese Nut (20) ist dabei radial innen in einem sich axial erstreckenden durchgehenden Steg 22 ausgenommen, der die gleiche Dicke wie die dicken Ringe 13 besitzt. Der zweite Dübelteil 3 besitzt zwei derartige Nuten 20 und somit auch zwei Stege 22, die diametral einander gegenüber liegen. Die Böden dieser Nuten 20 zeigen dabei nach radial außen; die Nuten 20 sind somit nach radial innen offen. Diese Nuten 20 stellen Führungsnuten, in denen die Vorsprünge 19, 19' entlang gleiten. Beim Aufschieben des zweiten Dübelteils 3 auf den ersten Dübelteil 2 ist darauf zu achten, dass diese beiden Dübelteile derartig zueinander verdreht werden, dass die Vorsprünge 19, 19' in der entsprechenden Nut 20 zu liegen kommen. Danach ist ein axiales Verschieben der beiden Dübelteile 2, 3 zueinander möglich.

Außen auf den Stegen 22 beim zweiten Dübelteil 3 sind zudem mehrere in Seitenansicht dreiecksförmige Rippen 23 vorhanden, wobei die Spitze dieses Dreiecks zur Kappe 5 zeigt.

Des weiteren besitzen die Stege 22 in Axialrichtung gleichmäßig beabstandete Ausnehmungen 24 (man vergleiche insbesondere Fig. 5), in welche die Vorsprünge 19, 19' des ersten Dübelteils 2 eingreifen und die Verrastfunktion sicher stellen können.

Diese Ausnehmungen 24 besitzen einen Abstand in Axialrichtung, der dem entsprechenden axialen Abstand der Vorsprünge 19 bzw. 19' des ersten Dübelteils 2 entspricht.

Wird der zweite Dübelteil 3 auf den ersten Dübelteil 2 aufgeschoben, dann kommen die Vorsprünge 19, 19' der beiden Reihen von Vorsprüngen des ersten Dübelteils 2 nach und nach in den genannten Ausnehmungen 24 zu liegen. Die Größe und Abmessungen der Vorsprünge 19, 19' ist daher den Abmessungen der Ausnehmungen 24 anzupassen.

Aufgrund der Flexibilität des eingesetzten Kunststoffmaterials und der Bemessungen der Dübelteile 2, 3 können die Vorsprünge 19, 19', sofern ein ausreichend hoher Druck in Axialrichtung ausgeübt wird, auch wieder mit den Ausnehmungen 24 außer Eingriff gelangen und zur in Axialrichtung nächsten Ausnehmung 24 beim gegeneinander Verschieben der beiden Dübelteile 2, 3 gelangen und dann in die gegenüberliegende Ausnehmung 24 einrasten bzw. damit verrasten.

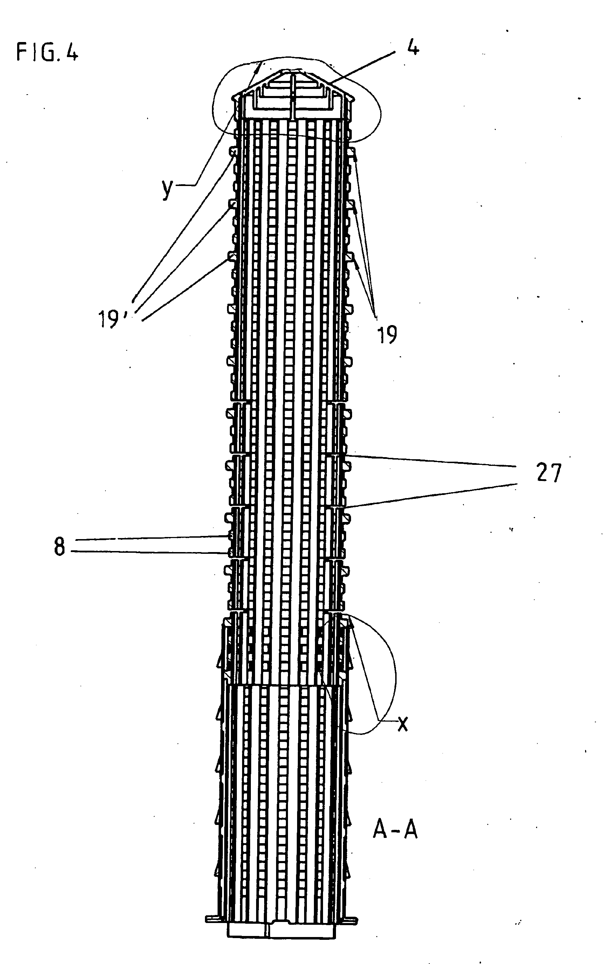

Der zweite Dübelteil 3 weist an seinem außen liegenden und somit von der Kappe 4 weg zeigenden Ende einen Deckel 5 (Fig. 7) auf, der über ein Filmscharnier 6 mit dem zweiten Dübelteil 8 verbunden ist. Dieser Deckel 5 besitzt zwei sich senkrecht kreuzende Schlitze 25. Am Kreuzungspunkt der Schlitze 25 befindet sich eine zentrische Durchgangsbohrung 26. Ist der Deckel 5 auf den zweiten Dübelteil 3 (Fig. 4) aufgesetzt, dann verläuft die Längsmittelachse 16 der Dübelteile 2, 3 durch diese Durchgangsbohrung 26 hindurch, welche zur Fixierung eine in den Dübel (1) einzusetzenden und nicht gezeigten Stange dient. Durch die geschilderte Schlitzstruktur kann diese Durchgangsbohrung 26 entsprechend dem Durchmesser der eingesetzten Stange durch diese aufgeweitet werden.

Wie insbesondere aus der Fig. 4 ersichtlich ist, besitzt der erste Dübelteil 2 mehrere axial gleichmäßig voneinander beabstandete Sollbruchstelle 27, die dadurch erhalten werden, dass in diesen Bereichen der zweite Dübelteil 2 teilweise geschlitzt ist und/order das Material verdünnt ist.

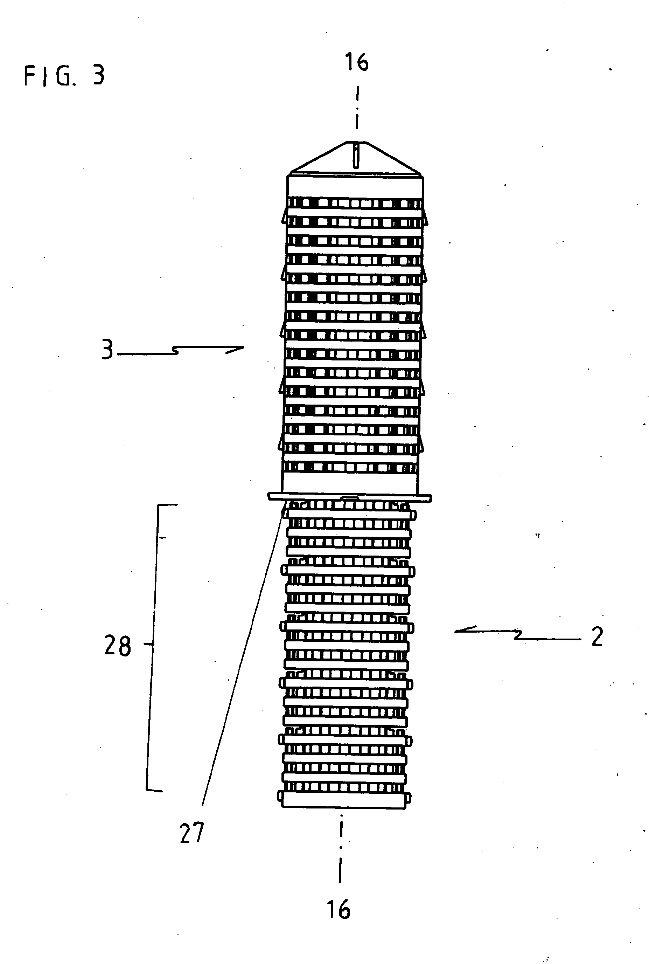

Wird beispielsweise der zweite Dübelteil 3, wie dies in der Fig. 3 dargestellt ist, bis zur Kappe 4 auf den ersten Dübelteil 2 aufgeschoben und ist der erste Dübelteil 2 länger als der zweite Dübelteil 3, dann kann der überstehende Bereich 28 des ersten Dübelteils 2 an der Sollbruchstelle 27 weggebrochen werden, was zu einer Ablängung des ersten Dübelteils 2 führt.

### Bezugzeichenliste:

- 1.: Dübel
- 2.: erster Dübelteil
- 3.: zweiter Dübelteil
- 4.: Kappe
- 5.: Deckel
- 6.: Filmscharnier
- 7.: zylindrische Wand
- 8.: dicker Ring
- 9.: dünner Ring
- 10.: durchgehende Öffnung
- 11.: Steg
- 12.: Vorsprung
- 13.: dicker Ring
- 14.: dünner Ring
- 15.: Öffnung
- 16.: Längsmittelachse
- 17.: Zylinderhülsenabschnitt
- 18.: Schlitz 19, 19'
- 19.: Vorsprung
- 20.: Nut
- 21.: Wand
- 22.: Steg
- 23.: Rippe
- 24.: Ausnehmung
- 25.: Schlitz
- 26.: Durchgangsbohrung
- 27.: Sollbruchstelle
- 28.: überstehender Bereich

## Patentansprüche

1. Längeneinstellbarer Dübel (1), insbesondere zur Befestigung einer Stange oder Gewindestange an Hohl- und Vollbaustoffen, mit einem ersten hülsenartigen, in seiner Wand mehrere durchgehende Öffnungen (10) aufweisender Dübelteil (2) und einem zweiten hülsenartigen, in seiner Wand mehrere durchgehende Öffnungen (15) aufweisender Dübelteil (3), der auf den ersten hülsenartigen Dübelteil (1) aufschiebbar ist,
**dadurch gekennzeichnet, dass**
der erste Dübelteil (2) mit dem zweiten Dübelteil (3) verrastbar ist.

2. Dübel nach Anspruch 1,
**dadurch gekennzeichnet, dass**
der erste Dübelteil (2) länger ist als der zweite Dübelteil (3).

3. Dübel nach Anspruch 1 oder 2,
**dadurch gekennzeichnet, dass**
beide Dübelteile (2,3) in ihrer Wand mehrere Öffnungen besitzen und insbesondere siebhülsenartig ausgestaltet sind.

4. Dübel nach einem der vorhergehenden Ansprüche,
**dadurch gekennzeichnet, dass**
der zweite Dübelteil (3) mehrere in Axialrichtung angeordnete und voneinander beabstandete Ausnehmungen (24) aufweist, in die ein nach außen zeigender Vorsprung (19,19') des ersten Dübelteils (2) zur Herstellung der Verrastung eingreift bzw. eingreifen kann.

5. Dübel nach Anspruch 4,
**dadurch gekennzeichnet, dass**
der erste Dübelteil (2) mindestens eine sich axial erstreckende Reihe von nach außen zeigenden, in Axialrichtung gleichmäßig beabstandeten und in etwa gleich ausgestalteten Vorsprüngen (19,19') besitzt,
der zweite Dübelteil (3) mindestens eine sich axial erstreckende Reihe von in Axialrichtung gleichmäßig voneinander beabstandeten und in etwa gleich ausgestalteten Ausnehmungen (24) besitzt und der Abstand der Vorsprünge (19,19') dem Abstand der Ausnehmungen (24) entspricht.

6. Dübel nach Anspruch 5,
**dadurch gekennzeichnet, dass** die Anzahl der Reihen der Vorsprünge (19,19') des ersten Dübelteils (2) der Anzahl der Reihen der Ausnehmungen (24) des zweiten Dübelteils (3) entspricht und die Reihen des ersten Dübelteils (2) unter dem gleichen Winkel, bezogen auf den Querschnitt, wie die Reihen des zweiten Dübels (3), ebenfalls bezogen auf den Querschnitt, angeordnet sind.

7. Dübel nach einem der vorhergehenden Ansprüche,
**dadurch gekennzeichnet, dass**
der erste Dübelteil (2) an einem Ende durch eine Kappe (16) verschlossen ist, die die darin eingeführten Stange axial zentriert, und
der zweite Dübelteil an seinem von der Kappe (16) wegzeigenden Ende einen gelenkig damit verbunden Deckel (5) besitzt, der auf den zweiten Dübelteil (3) aufgesetzt werden kann und eine zentrische Durchgangsbohrung (26) zur Führung der Stange aufweist.

8. Dübel nach einem der vorhergehenden Ansprüche,
**dadurch gekennzeichnet, dass**
der erste Dübelteil (2) mindestens eine Sollbruchstelle (27) besitzt.

9. Dübel nach Anspruch 8 ,
**dadurch gekennzeichnet, dass**
der erste Dübelteil (2) mehrere axial beabstandete Sollbruchstellen (27) besitzt

10. Dübel nach einem der vorhergehenden Ansprüche,
**dadurch gekennzeichnet, dass**
der erste (2) und zweite (2) Dübelteil jeweils einstückig aus einem Kunststoff spritzgeformt sind.
